# EUROPEAN PATENT SPECIFICATION

(11) **EP 3 549 802 B1**
(45) Date of publication and mention of the grant of the patent: **27.09.2023**
(21) Application number: 19166842.5
(22) Date of filing: 02.04.2019
(51) Int. Cl.: B60H 1/24, B60J 9/04, F24F 9/00, F25D 23/02

(54) **AN AIR CURTAIN, AND A VEHICLE COMPRISING AN AIR CURTAIN**
LUFTVORHANG UND FAHRZEUG MIT EINEM LUFTVORHANG
RIDEAU D'AIR ET VÉHICULE COMPRENANT UN RIDEAU D'AIR

(30) Priority: 06.04.2018 NL 2020728
(43) Date of publication of application: 09.10.2019
(73) Proprietor: H.OPDAM MANAGEMENT B.V., 1075 BW Amsterdam (NL)
(72) Inventor: OPDAM, Joannes Jozef Gerardus, Amsterdam (NL); OPDAM, Thomas Theodorus Jozef, 1074 VB Amsterdam (NL)
(74) Representative: van de Wal, Barend Willem

(56) References cited:
- EP-A1- 3 369 597
- NL-C2- 1 024 346
- US-A- 3 211 077

## Description

The present invention relates to an air curtain comprising
- a longitudinally extending air inlet section,
- a longitudinally extending air outlet section, said longitudinally extending air outlet section comprising an array of tubular channels, said array
   - having an upstream first side for air from the longitudinally extending air inlet section, and
   - a downstream second side for the discharge of air from the air curtain,
- at least one electrical fan for moving air from the longitudinally extending air inlet section to the longitudinally extending air outlet section, and
- means for guiding air from the at least one electrical fans to the first side of the array, said means comprising at least one wall member defining a flow path for air from the air inlet section to the air outlet section.

It is well-known to use a vehicle, such as a truck or a trailer to transport freight that has to be kept cool, or even frozen. It is also possible that the cargo has to be kept at a higher temperature than the ambient temperature, e.g. above freezing point in cold climates. It is known in the art to provide such vehicles with an air curtain, which is a device for providing a (typically) downward flow of air near the access opening of a cargo space so as to reduce the ingress of ambient air when the cargo door is open. Thus a significant saving in energy can be achieved. In case of perishable freight, the air curtain may prevent perishing, avoiding significant financial loss. The downward flow of air generated by an air curtain is also called an air curtain. To avoid ambiguity, in the present application the flow of air will be written with a hyphen as air-curtain. Air is sucked into the air curtain at the air inlet section by the fans and the means for guiding air comprises a wall defining a flow path for said air to the air outlet section where it is expelled.

The better the air curtain works, i.e. the longer the distance over which there is a (laminar) downward flow of air towards the floor and preferably to the floor of the cargo space, the more the air-curtain helps to ensure that the cargo remains at the desired temperature and energy for cooling (or perhaps heating) is saved by reducing the ingress of ambient air. It goes without saying that the energy consumption of the air curtain should be relatively modest.

A problem with an air curtain is that to provide an even, downward flow of air an air outlet section is required that extends over a relatively long distance downwardly. If the vehicle is a relatively small vehicle compared to a truck, such as a van, the distance to the floor is less, but the bulk of the air curtain is much more of a hindrance. With a less bulky air curtain the quality of the air-curtain is reduced.

This problem addressed by an air curtain according to the preamble which is commercially available from Brightec B.V. (Amsterdam, the Netherlands) and the subject of the co-pending application EP3549802. Its longitudinally extending air outlet section comprises an array of plastic tubes that help to reduce turbulence and hence achieve a relatively long air-curtain. To increase the length of the air-curtain, the means for guiding air further comprise curved baffles close to the array and positioned in the flow path between the fans and the array to guide the air to the array.

Documents NL 1 024 346 C2 and US 3 211 077 A show air curtains comprising multiple baffle members.

A problem of the known air curtain is that the air-curtain is relatively costly, making the investment in an air curtain harder to justify from an economical point of view.

The object of the present invention is to provide an air curtain in which said problem is reduced.

To this end, an air curtain according to claim 1 is characterized in that the air curtain comprises one single longitudinally extending baffle for guiding air from the fan to the array, said baffle comprising one baffle member, said one baffle member defining together with the at least one wall member of the air curtain two wide channels for air from the at least one fan to the first side of the array, wherein
the at least one fan comprises at least one of
- a row of electrical fans wherein the fan blades rotate in a plane, with the axes of rotation being perpendicular to said plane, wherein the longitudinally extending baffle is with its leading edge at a distance - measured parallel with the axis of rotation of the fans - of less than 1/3rd of the diameter D of the fan as defined by the tips of its blades to the blades of the fan; the location of the leading edge of the longitudinally extending baffle being chosen such that projected on the plane, two wide input areas are defined that each cover a section of the effective surface areas of the fan blades, and
- a cross-flow fan having an axis of rotation extending in the longitudinal direction of the air curtain, wherein the longitudinally extending baffle is with its leading edge at a distance of less than 1/3rd of the diameter D of the fan as defined by the edge of its blades when closest to the leading edge of the longitudinally extending baffle;
   and,

- the longitudinally extending baffle comprises a trailing edge, wherein said trailing edge is at a shortest distance of less than 5 cm from the first face of the array of tubular channels and defines two wide outlet areas.

It has been found that the air curtain according to the present invention with a single longitudinally extending baffle extending over substantially the full length of the flow path of air between the fan(s) and the array is of a simple construction yet already results in an improved air-curtain compared to an air curtain having a plurality of curved baffles that divert the flow of air over more than 30° (typically about 90°) downward and that do not extend close to the fan(s). The present invention also provides for a saving in weight and cost of baffles compared to said solution. It has also been found that the invention allows for a reduction in the energy consumption (reduced air resistance inside the air curtain). The single baffle allows for an improved distribution of air over the channels of the array of channels. The one baffle may be curved or angled towards the first side, such that it makes an angle between 10 and 90°, with 90° being perpendicular to the first side.

Arrays of tubular channels are commercially available, and typically made of plastic. They can be cut to the desired shape with oblique first side, if desired.

The array is typically an array of tubular channels that is a honeycomb array, an array of cylindrical tubes etc. The cross-section of a tubular channel of an array perpendicular to its centreline may for example be rectangular, polygonal such as square or hexagonal, or may be circular. Typically the tubular channels have a largest internal diameter of less than 1 cm.

In general the diameter D of an electrical fan as defined by the tips of its blades is larger than the width W (transverse to the longitudinal direction of the outlet opening) of the outlet opening of the air curtain, typically at least 10% and preferably at least 200 more.

The longitudinally extending baffle may consist of separate baffle members that together make up the one longitudinally extending baffle.

The term wide in the present application refers to the longitudinal direction of the air curtain.

The outlet areas extend transverse to the flow direction through the wide channels.

According to a possible embodiment the upstream first side of the array of tubular channels is facing and at an angle α between 10° and 80° to the flow path of air feeding said array of tubular channels.

This allows for a simple construction. The trailing edge of the baffle may rest on the upstream first side.

For the angle α, 90° would be perpendicular to the flow path of the air feeding the array. The angle α is preferably between 20° and 70°, and more preferably between 30° and 55°.

According to a favourable embodiment, the ratio of the outlet areas is within 20% of the ratio of the corresponding pair of effective surface areas for the input areas.

Thus a further improved homogeneous distribution can be achieved. The deviation is preferably less than 10%, but typically more than 1%, in particular more than 2%.

According to a favourable embodiment, the largest distance between the trailing edge of the baffle and the upstream first side of the array is at most 3 cm.

Thus the air is passed more efficiently fed to and appropriately distributed over the tubes of the array.

According to a favourable embodiment, the distance between i) the trailing edge of the baffle in the flow path of air from the fans and ii) the upstream first side of the array, is at least 7 mm, preferably at least 15 mm.

This helps to reduce differences in flow speed leaving the outlet surface areas, i.e. emanating from the two adjacent wide channels. In case of multiple fans, the distance between i) the trailing edge (261) of the baffle in the flow path of air from the at least one fan and ii) the upstream first side of the array is at least 7 mm, preferably at least 15 mm.

According to a favourable embodiment, the row of fans comprises at least 6 electrical fans per meter of the longitudinally extending air outlet section and preferably at least 8.

This allows for a homogenous air speed distribution along the length of the longitudinally extending air outlet section. In practice, the number of electrical fans will be 10 or more per m.

According to a favourable embodiment, the electrical fans of a row of electrical fans have a spacing of less than 5 cm, preferably less than 3 cm between each other, and more preferably less than 1 cm.

This results in a very homogenous air-curtain extending over a long distance. It is most preferred that the electrical fans are immediately adjacent to each other.

According to a favourable embodiment, the electrical fan comprises blades, and the air curtain comprises an air passage between the electrical fan and the array, which air passage has a height H perpendicular to the flow direction of air that is smaller than the diameter D of the electrical fan as defined by its blades.

It has been found that by having a constriction after the electrical fan (or fans), the air-curtain becomes more homogeneous. The height of said air passage is preferably at most 90% of the diameter of the fan as defined by the blades, more preferably at most 80%. To avoid a significant increase in air resistance, the height of said air passage (which will encompass all flow of air from the fans to the array) is preferably at least 40% of the diameter of the fan as defined by the blades, more preferably at least 50%.

According to a favourable embodiment, the electrical fan comprises blades, and the air curtain comprises an air passage between the electrical fan and the array, wherein said air passage has a height H perpendicular to the flow direction of air that is smaller than the width W of the outlet opening of the air curtain.

It has been found that by having a constriction between the electrical fan (or fans) and the array, the air-curtain becomes more homogeneous. The height of said air passage (which will encompass all flow of air from the fans to the array) is preferably at most 90% of the width W, more preferably at most 80%. To avoid a significant increase in air resistance, the height of said air passage is preferably at least 50% of the width W, more preferably at least 60%.

Finally, the present invention relates to a vehicle comprising an air curtain, wherein the air curtain is an air curtain according to any of the claims 1 to 9.

The vehicle may be a motorised vehicle such as a van or a truck, or it may be a pulled vehicle, such as a trailer.

Typically, the centrelines of the tubular channels of the array will be perpendicular to the floor of the vehicle, but they may be at an angle of up to 70° in the midsaggital plane of the vehicle, with typically the acute angle at the side of the front of the vehicle. So, the angle will be between 89° and 70° with the wheel base (floor), the point of the angle at the floor pointing away from the front of the vehicle.

The present invention will now be illustrated with reference to the drawing where
Fig. 1 shows a schematic cut-out side view of a vehicle; and
Fig. 2 shows a cross-sectional view through an air curtain.

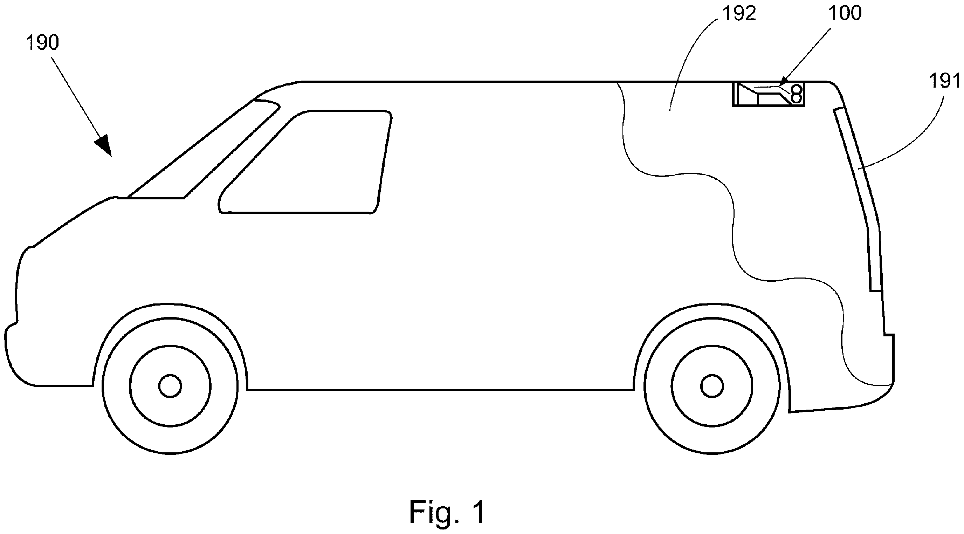

Fig. 1 shows a schematic cut-out side view of a vehicle 190, here a van 190, comprising a rear door 191 and inside cargo space 192 an air curtain 100 according to the invention, which extends over substantially the whole width of the cargo space 192.

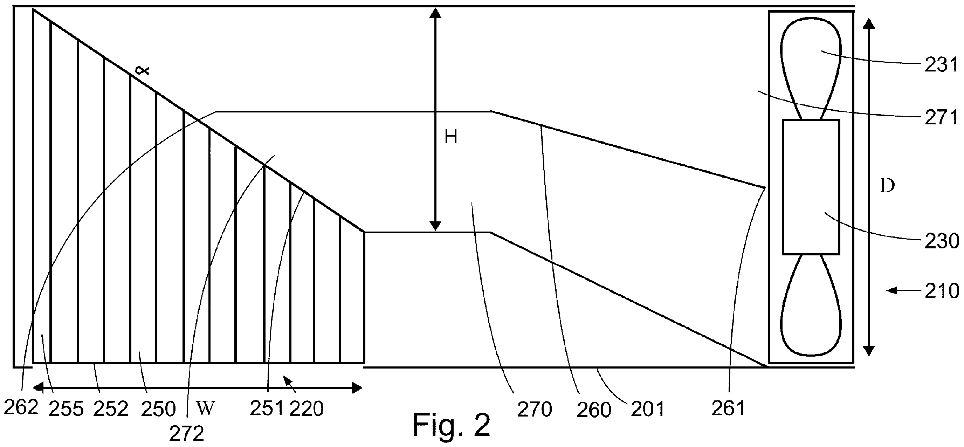

Fig. 2 shows a cross-sectional view through the air curtain 100 of the vehicle 190 of Fig. 1.

The air curtain 100 comprises a housing 201. The air curtain 100 has an air inlet section 210, and an air outlet section 220. The air outlet section 220 comprises a body 250 comprising an array of tubular channels 255. These help to reduce turbulence and thus improve a laminar air flow, i.e. an air-curtain. In this embodiment, said body 250 comprises a multitude of parallel plastic tubes, the centrelines of said tubes will be substantially transverse to the floor of the cargo space 192 of the vehicle 190.

The body 250 comprises an upstream first side 251 and a downstream second side 252 from which the air-curtain appears.

When the cargo door 191 is open, ambient air is introduced into the air curtain 100 via the air inlet section 210 facing the door opening and expelled from the air curtain 100 by a linear array of electrical fans 230, in particular those used as computer fans. Here the number is 12 fans per meter.

In the embodiment of the invention disclosed here, the body comprising tubular channels 255 is a tapered array, with the first side 251 at an angle α to the direction of flow of air through the air curtain where it is feeding the array 250 (in the embodiment shown in Fig. 2 horizontal from right to left).

The fan blades 231 rotate in a plane, with the axes of rotation being perpendicular to said plane. An air curtain 100 contains a baffle 260 (separation wall positioned inside the flow of air from the fans) with its leading edge 261 at a distance - measured parallel with the axis of rotation of the fans - of less than 1/3rd of the diameter D of the fan as defined by its blades 231 to the blades of the fan. The location of the leading edge 261 of the baffle 260 and two wall members with only one side in contact with the flow of air from the fans defining the passage for air from the fans to the array, is chosen such that projected on the plane (the projection being in a direction perpendicular to said plane), they define wide (longitudinally extending; transverse to the direction of flow through the air curtain) input areas that each cover a section of the effective surface areas of the fan blades 231, so not counting the central parts of the fans 230 that do not contribute to the flow of air. Each input area is the inlet 271 of a wide channel 270, and is narrowed in height towards the body 250. At the trailing edge 262 of the baffle 260, the two outlet surface areas 272 of the wide channels, which outlet surface areas extend transverse to the flow direction through the wide channels 270, have a surface area ratio that is smaller than the ratio of the sections of the effective surface areas for the input areas of the wide channels 270.

In the embodiment disclosed here, the smallest height H of the path for air flowing through the air curtain 100 after the electrical fans 230 is less than
- the width W of the air outlet section 220 (width W being parallel to the second side of the body and transverse to the longitudinal direction of the air curtain 100), and
- less than the diameter D of the fan as defined by the blades 231 of the electrical fans 230, which has been found to result in an improved air-curtain.

The invention may be varied within the scope of the appended claims. For example the first side and the second side of the array may be substantially parallel (at an angle of less than 10° with respect to each other), as a result of which the length of the channels is substantially the same and the friction in the channels of the array is substantially the same. Thus less energy is lost, resulting in a more effective air curtain.

## Claims

1. An air curtain (100) comprising
- a longitudinally extending air inlet section (210),
- a longitudinally extending air outlet section (220), said longitudinally extending air outlet section (220) comprising an array (250) of tubular channels (255), said array (250)
- having an upstream first side (251) for air from the longitudinally extending air inlet section (210), and
- a downstream second side (252) for the discharge of air from the air curtain (100),
- at least one electrical fan (230) for moving air from the longitudinally extending air inlet section (210) to the longitudinally extending air outlet section (220), and
- means for guiding air from the at least one electrical fans (230) to the first side (251) of the array (250), said means comprising at least one wall member defining a flow path for air from the air inlet section (210) to the air outlet section (220);
**characterized in that** the air curtain (100) is an air curtain with a single longitudinally extending baffle (260) for guiding air from the at least one electrical fan (230) to the array (250), said baffle (260) comprising one baffle member, said one baffle member defining together with the at least one wall member of the air curtain (100) two wide channels (270) for air from the at least one fan (230) to the first side (251) of the array (250), wherein
the at least one fan (230) comprises at least one of
- a row of electrical fans (230) wherein the fan blades (231) rotate in a plane, with the axes of rotation being perpendicular to said plane, wherein the longitudinally extending baffle (260) is with its leading edge (261) at a distance - measured parallel with the axis of rotation of the fans (230) - of less than 1/3rd of the diameter D of the fan as defined by the tips of its blades (231) to the blades (231) of the fan; the location of the leading edge (261) of the longitudinally extending baffle (260) being chosen such that projected on the plane, two wide input areas (271) are defined that each cover a section of the effective surface areas of the fan blades (231), and
- a cross-flow fan having an axis of rotation extending in the longitudinal direction of the air curtain (100), wherein the longitudinally extending baffle (260) is with its leading edge (261) at a distance of less than 1/3rd of the diameter D of the fan as defined by the edge of its blades (231) when closest to the leading edge (261) of the longitudinally extending baffle (260);
and,
- wherein the longitudinally extending baffle (260) comprises a trailing edge (262), wherein said trailing edge (262) is at a shortest distance of less than 5 cm from the first face of the array (250) of tubular channels (255) and defines two wide outlet areas (272).

2. The air curtain (100) according to claim 1, wherein the upstream first side (251) of the array (250) of tubular channels (255) is facing and at an angle α between 10° and 80° to the flow path of air feeding said array (250) of tubular channels (255).

3. The air curtain (100) according to claim 1 or 2, wherein the ratio of the outlet areas (272) is within 20% of the ratio of the corresponding pair of effective surface areas (271) for the input areas (271).

4. The air curtain (100) according to any of the preceding claims, wherein the largest distance between the trailing edge (262) of the baffle and the upstream first side (251) of the array (250) is at most 3 cm.

5. The air curtain (100) according to any of the preceding claims, wherein the distance between i) the trailing edge (261) of the baffle in the flow path of air from the fans (230) and ii) the upstream first side (251) of the array (250), is at least 7 mm, preferably at least 15 mm.

6. The air curtain (100) according to any of the preceding claims, wherein the row of fans comprises at least 6 electrical fans (230) per meter of the longitudinally extending air outlet section (220) and preferably at least 8.

7. The air curtain (100) according to any of the preceding claims, wherein the electrical fans (230) of a row of electrical fans have a spacing of less than 5 cm, preferably less than 3 cm between each other, and more preferably less than 1 cm.

8. The air curtain (100) according to any of the preceding claims, wherein the electrical fan (230) comprises blades (231), and the air curtain (100) comprises an air passage between the electrical fan (230) and the array (250), which air passage has a height H perpendicular to the flow direction of air that is smaller than the diameter D of the electrical fan (230) as defined by its blades (231).

9. The air curtain (100) according to any of the preceding claims, wherein the electrical fan comprises blades (231), and the air curtain (100) comprises an air passage between the electrical fan and the array (250), wherein said air passage has a height H perpendicular to the flow direction of air that is smaller than the width W of the outlet opening of the air curtain (100).

10. A vehicle (190) comprising an air curtain (100), **characterized in that** the air curtain (100) is an air curtain (100) according to any of the claims 1 to 9.

## Patentansprüche

1. Luftvorhang (100), Folgendes umfassend:
- einen sich längs erstreckenden Lufteinlassabschnitt (210),
- einen sich längs erstreckenden Luftauslassabschnitt (220), wobei der sich längs erstreckende Luftauslassabschnitt (220) eine Anordnung (250) röhrenförmiger Kanäle (255) umfasst, wobei die Anordnung (250) Folgendes aufweist:
- eine prozessaufwärtige erst Seite (251) für Luft von dem sich längs erstreckenden Lufteinlassabschnitt (210), und
- eine prozessabwärtige Seite (252) zum Ablassen von Luft von dem Luftvorhang (100),
- mindestens einen elektrischen Lüfter (230) zum Bewegen von Luft von dem sich längs erstreckenden Lufteinlassabschnitt (210) zu dem sich längs erstreckenden Luftauslassabschnitt (220) und
- Mittel zum Führen von Luft von dem mindestens einen elektrischen Lüfter (230) zu der ersten Seite (251) der Anordnung (250), wobei die Mittel mindestens ein Wandelement umfassen, die einen Strömungsweg für Luft von dem Lufteinlassabschnitt (210) zu dem Luftauslassabschnitt (220) definieren,
**dadurch gekennzeichnet, dass** der Luftvorhang (100) ein Luftvorhang mit einem einzelnen sich längs erstreckenden Leitblech (260) zum Führen von Luft von dem mindestens einen elektrischen Lüfter (230) zu der Anordnung (250) ist, wobei das Leitblech (260) ein Leitblechelement umfasst, wobei das eine Leitblechelement zusammen mit dem mindestens einen Wandelement des Luftvorhangs (100) zwei weite Kanäle (270) für die Luft von dem mindestens einen Lüfter (230) zu der ersten Seite (251) der Anordnung (250) definiert, wobei der mindestens eine Lüfter (230) mindestens eines des Folgenden umfasst:
- eine Reihe elektrischer Lüfter (230), wobei sich die Lüfterblätter (231) in einer Ebene drehen, wobei die Drehachsen senkrecht zu der Ebene liegen, wobei das sich längs erstreckende Leitblech (260) mit seiner Anströmkante (261) in einem Abstand - gemessen parallel zu der Drehachse der Lüfter (230) - von weniger als einem Drittel des Durchmessers D des Lüfters, wie er durch die Spitzen seiner Blätter (231) definiert ist, zu den Blättern (231) des Lüfters liegt, wobei die Position der Anströmkante (261) des sich längs erstreckenden Leitblechs (260) derart gewählt ist, dass - projiziert auf die Ebene - zwei weite Eingangsbereiche (271) definiert sind die jeder einen Abschnitt der wirksamen Oberflächen der Lüfterblätter (231) abdeckt, und
- einen Querstromlüfter, der eine Drehachse aufweist, die sich in der Längsrichtung des Luftvorhangs (100) erstreckt, wobei der Abstand der Anströmkante (261) des sich längs erstreckenden Leitblechs (260) weniger als ein Drittel des Durchmessers D des Lüfters beträgt, wie er durch die Kante seiner Blätter (231) definiert ist, wenn die Blätter der Anströmkante (261) des sich längs erstreckenden Leitblechs (260) am nächsten sind, und
- wobei das sich längs erstreckende Leitblech (260) eine Abrisskante (262) umfasst, wobei die Abrisskante (262) in einem kürzesten Abstand von weniger als 5 cm zu der ersten Fläche der Anordnung (250) röhrenförmiger Kanäle (255) liegt und zwei weite Auslassbereiche (272) definiert.

2. Luftvorhang (100) nach Anspruch 1, wobei die prozessaufwärtige erste Seite (251) der Anordnung (250) röhrenförmiger Kanäle (255) zu dem Strömungsweg der Luft weist, der die Anordnung (250) röhrenförmiger Kanäle (255) speist, und in einem Winkel α zwischen 10° und 80° zu diesem liegt.

3. Luftvorhang (100) nach Anspruch 1 oder 2, wobei das Verhältnis der Auslassbereiche (272) innerhalb von 20 % des Verhältnisses des entsprechenden Paares wirksamer Oberflächen (271) für die Einlassbereiche (271) liegt.

4. Luftvorhang (100) nach einem der vorhergehenden Ansprüche, wobei der größte Abstand zwischen der Abrisskante (262) des Leitblechs und der prozessaufwärtigen ersten Seite (251) der Anordnung (250) höchstens 3 cm beträgt.

5. Luftvorhang (100) nach einem der vorhergehenden Ansprüche, wobei der Abstand zwischen I) der Abrisskante (261) des Leitblechs in dem Strömungsweg der Luft von den Lüftern (230) und II) der prozessaufwärtigen ersten Seite (251) der Anordnung (250) mindestens 7 mm, vorzugsweise mindestens 15 mm beträgt.

6. Luftvorhang (100) nach einem der vorhergehenden Ansprüche, wobei die Reihe von Lüftern mindestens 6 elektrische Lüfter (230) pro Meter des sich längs erstreckenden Luftauslassabschnitts (220) und vorzugsweise mindestens 8 umfasst.

7. Luftvorhang (100) nach einem der vorhergehenden Ansprüche, wobei die elektrischen Lüfter (230) einer Reihe elektrischer Lüfter zwischen einander einen Zwischenraum von weniger als 5 cm aufweisen, vorzugsweise weniger als 3 cm und bevorzugter weniger als 1 cm.

8. Luftvorhang (100) nach einem der vorhergehenden Ansprüche, wobei der elektrische Lüfter (230) Blätter (231) umfasst und der Luftvorhang (100) einen Luftdurchlass zwischen dem elektrischen Lüfter (230) und der Anordnung (250) umfasst, wobei der Luftdurchlass eine Höhe H senkrecht zu der Strömungsrichtung der Luft aufweist, die geringer als der Durchmesser D des elektrischen Lüfters (230) ist, wie er durch seine Blätter (231) definiert ist.

9. Luftvorhang (100) nach einem der vorhergehenden Ansprüche, wobei der elektrische Lüfter Blätter (231) umfasst und der Luftvorhang (100) einen Luftdurchlass zwischen dem elektrischen Lüfter und der Anordnung (250) umfasst, wobei der Luftdurchlass eine Höhe H senkrecht zu der Strömungsrichtung der Luft aufweist, die geringer als die Weite W der Auslassöffnung des Luftvorhangs (100) ist.

10. Fahrzeug (190), einen Luftvorhang (100) umfassend, **dadurch gekennzeichnet, dass** der Luftvorhang (100) ein Luftvorhang (100) nach einem der Ansprüche 1 bis 9 ist.

## Revendications

1. Rideau d'air (100) comprenant :
- une section d'entrée d'air s'étendant longitudinalement (210),
- une section de sortie d'air s'étendant longitudinalement (220), ladite section de sortie d'air s'étendant longitudinalement (220) comprenant un réseau (250) de canaux tubulaires (255), ledit réseau (250)
- ayant un premier côté amont (251) pour l'air provenant de la section d'entrée d'air s'étendant longitudinalement (210), et
- un deuxième côté aval (252) pour l'évacuation de l'air provenant du rideau d'air (100),
- au moins un ventilateur électrique (230) pour déplacer l'air provenant de la section d'entrée d'air s'étendant longitudinalement (210) vers la section de sortie d'air s'étendant longitudinalement (220), et
- un moyen pour guider l'air provenant de l'au moins un ventilateur électrique (230) vers le premier côté (251) du réseau (250), ledit moyen comprenant au moins un élément de paroi définissant un trajet d'écoulement pour l'air provenant de la section d'entrée d'air (210) vers la section de sortie d'air (220) ;
**caractérisé en ce que** le rideau d'air (100) est un rideau d'air avec un seul déflecteur s'étendant longitudinalement (260) pour guider l'air provenant de l'au moins un ventilateur électrique (230) vers le réseau (250), ledit déflecteur (260) comprenant un élément de déflecteur, ledit élément de déflecteur définissant conjointement avec l'au moins un élément de paroi du rideau d'air (100) deux canaux larges (270) pour l'air provenant de l'au moins un ventilateur (230) vers le premier côté (251) du réseau (250),
l'au moins un ventilateur (230) comprennent au moins un élément parmi
- une rangée de ventilateurs électriques (230) dans laquelle les pales de ventilateur (231) tournent dans un plan, les axes de rotation étant perpendiculaires audit plan, le déflecteur s'étendant longitudinalement (260) ayant son bord d'attaque (261) à une distance - mesurée parallèlement à l'axe de rotation des ventilateurs (230) - de moins d'un tiers du diamètre D du ventilateur tel que défini par les extrémités de ses pales (231) jusqu'aux pales (231) du ventilateur ; l'emplacement du bord d'attaque (261) du déflecteur s'étendant longitudinalement (260) étant choisi de telle sorte que projeté sur le plan, deux zones d'entrée larges (271) soient définies qui recouvrent chacune une section des zones de surface efficaces des pales de ventilateur (231), et
- un ventilateur tangentiel ayant un axe de rotation s'étendant dans la direction longitudinale du rideau d'air (100), le déflecteur s'étendant longitudinalement (260) ayant son bord d'attaque (261) à une distance de moins d'un tiers du diamètre D du ventilateur tel que défini par le bord de ses pales (231) lorsqu'il est le plus proche du bord d'attaque (261) du déflecteur s'étendant longitudinalement (260) ;
et,
- le déflecteur s'étendant longitudinalement (260) comprenant un bord de fuite (262), ledit bord de fuite (262) étant à une distance la plus courte de moins de 5 cm de la première face du réseau (250) de canaux tubulaires (255) et définissant deux zones de sortie larges (272).

2. Rideau d'air (100) selon la revendication 1, dans lequel le premier côté amont (251) du réseau (250) de canaux tubulaires (255) fait face et à un angle α compris entre 10° et 80° par rapport au trajet d'écoulement d'air alimentant ledit réseau (250) de canaux tubulaires (255).

3. Rideau d'air (100) selon la revendication 1 ou la revendication 2, dans lequel le rapport des zones de sortie (272) est dans les 20 % du rapport de la paire correspondante de zones de surface efficaces (271) pour les zones d'entrée (271).

4. Rideau d'air (100) selon l'une quelconque des revendications précédentes, dans lequel la distance la plus grande entre le bord de fuite (262) du déflecteur et le premier côté amont (251) du réseau (250) est d'au plus 3 cm.

5. Rideau d'air (100) selon l'une quelconque des revendications précédentes, dans lequel la distance entre i) le bord de fuite (261) du déflecteur dans le trajet d'écoulement de l'air provenant des ventilateurs (230) et ii) le premier côté amont (251) du réseau (250), est d'au moins 7 mm, préférablement d'au moins 15 mm.

6. Rideau d'air (100) selon l'une quelconque des revendications précédentes, dans lequel la rangée de ventilateurs comprend au moins 6 ventilateurs électriques (230) par mètre de la section de sortie d'air s'étendant longitudinalement (220) et préférablement au moins 8.

7. Rideau d'air (100) selon l'une quelconque des revendications précédentes, dans lequel les ventilateurs électriques (230) d'une rangée de ventilateurs électriques ont un espacement de moins de 5 cm, préférablement de moins de 3 cm entre eux, et plus préférablement de moins de 1 cm.

8. Rideau d'air (100) selon l'une quelconque des revendications précédentes, dans lequel le ventilateur électrique (230) comprend des pales (231), et le rideau d'air (100) comprend un passage d'air entre le ventilateur électrique (230) et le réseau (250), lequel passage d'air a une hauteur H perpendiculaire à la direction d'écoulement de l'air qui est plus petite que le diamètre D du ventilateur électrique (230) tel que défini par ses pales (231).

9. Rideau d'air (100) selon l'une quelconque des revendications précédentes, dans lequel le ventilateur électrique comprend des pales (231), et le rideau d'air (100) comprend un passage d'air entre le ventilateur électrique et le réseau (250), ledit passage d'air ayant une hauteur H perpendiculaire à la direction d'écoulement de l'air qui est plus petite que la largeur W de l'ouverture de sortie du rideau d'air (100).

10. Véhicule (190) comprenant un rideau d'air (100), **caractérisé en ce que** le rideau d'air (100) est un rideau d'air (100) selon l'une quelconque des revendications 1 à 9.
